# EUROPEAN PATENT APPLICATION

(11) **EP 4 601 162 A1**
(43) Date of publication of application: **13.08.2025**
(21) Application number: 25152330.4
(22) Date of filing: 16.01.2025
(51) Int. Cl.: H02K 1/20, H02K 5/20, H02K 9/19, F16J 15/06

(54) **MOTOR**

(30) Priority: 09.02.2024 JP 2024018508
(71) Applicant: TOYOTA JIDOSHA KABUSHIKI KAISHA, Aichi-ken, 471-8571 (JP)
(72) Inventor: OHIRA, Kengo, Toyota-shi, 471-8571 (JP); SAKAI, Tatsuya, Toyota-shi, 471-8571 (JP)
(74) Representative: Kuhnen & Wacker Patent- und Rechtsanwaltsbüro PartG mbB

(57) **Abstract**

A motor includes a stator core (32), a case (50), a guide ring (60), and a seal member (66, 68). The guide ring (60) has a ring shape, and is sandwiched between the end surface of the stator core (32) and a facing portion. The seal member (66, 68) is provided at a target interface that is at least one of an interface between the guide ring (60) and the end surface and an interface between the guide ring (60) and the facing portion. A space surrounded by an inner surface of the case (50), an outer peripheral surface of the guide ring (60), and the end surface configures a circular-ring coolant flow path (56). The seal member (66, 68) is configured of a linear member. The linear member is sandwiched at the target interface in a state of being annularly bent along the guide ring (60) such that both end portions of the linear member are in contact with each other.

## Description

### BACKGROUND OF THE INVENTION

### 1. Field of the Invention

The technology disclosed herein relates to a motor.

### 2. Description of Related Art

A motor disclosed in Japanese Unexamined Patent Application Publication No. 2017-204980 includes a case, a stator core, and a guide ring. The stator core and the guide ring are accommodated in the case having a cylindrical shape. The guide ring includes a base portion that is in contact with an end surface of the stator core, and an annular protruding portion extending toward a radially outer side from the base portion. The outer peripheral surface of the stator core and the outer peripheral surface of the annular protruding portion are in contact with the inner peripheral surface of the case. A space surrounded by the stator core, the guide ring, and the case configures a circular-ring coolant flow path. The motor is cooled by supplying a coolant (for example, oil) from the circular-ring coolant flow path to each portion in the case.

### SUMMARY OF THE INVENTION

In the motor of JP 2017-204980 A, the outer peripheral surface of the guide ring (that is, the outer peripheral surface of the annular protruding portion) is in contact with the inner peripheral surface of the case. Accordingly, a gap is generated between the case and the guide ring unless the diameter and the roundness of each of the inner peripheral surface of the case and the outer peripheral surface of the guide ring are accurate. When a gap is generated between the case and the guide ring, the coolant in the circular-ring coolant flow path leaks. This specification proposes a technology capable of preventing leakage of the coolant in the circular-ring coolant flow path.

A motor according to Aspect 1 disclosed herein includes a stator core, a case, a guide ring, and a seal member. The case accommodates the stator core. The case includes a facing portion that faces one end surface of the stator core. The guide ring is accommodated in the case, has a ring shape extending around a motor shaft, and is sandwiched between the end surface and the facing portion. The seal member is provided at a target interface that is at least one of an interface between the guide ring and the end surface and an interface between the guide ring and the facing portion. A space surrounded by an inner surface of the case, an outer peripheral surface of the guide ring, and the end surface configures a circular-ring coolant flow path. The seal member is configured of a linear member. The linear member is sandwiched at the target interface in a state of being annularly bent along the guide ring such that both end portions of the linear member are in contact with each other.

In the motor, the guide ring is sandwiched between the end surface of the stator core and the facing surface of the case. Thus, the interface between the guide ring and the end surface of the stator core and the interface between the guide ring and the facing surface of the case are a seal surface configuring the circular-ring coolant flow path. The seal member is provided at the target interface that is at least one of the interfaces, and hence the leakage of the coolant at the target interface can be prevented. Further, the seal member is configured of the linear member. With the linear member being sandwiched at the target interface in the state of being annularly bent along the guide ring such that both the end portions of the linear member are in contact with each other, the annular target interface is sealed. The linear member can be successively molded by extrusion molding, and hence can be efficiently manufactured as compared to a seal member molded into a ring shape in advance (for example, an O-ring or the like). Thus, the linear member can be manufactured at lower cost than a seal member molded into a ring shape in advance. Accordingly, the motor can be manufactured at low cost.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exploded perspective view of a motor of an embodiment;
FIG. 2 is a sectional view of the motor of the embodiment;
FIG. 3 is a plan view of a stator as viewed along an axial direction;
FIG. 4 is an enlarged sectional view of a guide ring and its surrounding;
FIG. 5 is a plan view of the guide ring as viewed along the axial direction;
FIG. 6 is an enlarged view of a groove in a range X (a lowermost portion of the guide ring) of FIG. 5;
FIG. 7 is an enlarged view of the groove and a seal member in the range X (the lowermost portion of the guide ring) of FIG. 5;
FIG. 8 is a perspective view of a stator core;
FIG. 9 is an enlarged view of a wide portion 71w of a modification example;
FIG. 10 is a plan view of a guide ring of the modification example as viewed in the axial direction; and
FIG. 11 is an enlarged view of a joining portion of both tip end surfaces of a seal member of the modification example.

### DETAILED DESCRIPTION OF EMBODIMENTS

A motor disclosed herein may have configurations of the following aspects.

### Aspect 2

The motor according to Aspect 1, in which the linear member includes an overlap portion in which both the end portions overlap in a radial direction of the guide ring.

### Aspect 3

The motor according to Aspect 2, in which
a surface of the guide ring configuring the target interface is provided with an annular groove,
the linear member is disposed in the annular groove,
the annular groove includes a narrow portion and a wide portion having a width larger than the width of the narrow portion, and
the overlap portion is disposed in the wide portion.

### Aspect 4

The motor according to Aspect 1, in which one tip end surface and the other tip end surface of the linear member are bonded or welded to each other.

### Aspect 5

The motor according to any one of Aspects 1 to 4, in which
the seal member is disposed so as to be inclined with respect to a horizontal plane, and
a part of the linear member in which both the end portions are in contact with each other is disposed in a range including a lowermost portion of the seal member.

### Aspect 6

The motor according to any one of Aspects 1 to 5, in which
the case stores a coolant, and
a part of the linear member in which both the end portions are in contact with each other is disposed lower than a liquid level of the coolant in the case.

### Aspect 7

The motor according to any one of Aspects 1 to 6, in which, inside of the stator core, a core-interior coolant flow path through which a coolant supplied from the circular-ring coolant flow path flows is provided.

### Aspect 8

The motor according to any one of Aspects 1 to 7, in which
a coil end is disposed on an inner peripheral side of the guide ring, and
the guide ring has a coolant ejection flow path that passes through the guide ring in a radial direction.

In any of Aspects 2 to 4, leakage of the coolant from a contact part of both the end portions of the linear member can be prevented.

In Aspect 5, the seal member is disposed so as to be inclined with respect to the horizontal plane. In other words, a center axis of the annular seal member is inclined with respect to the vertical axis. In this configuration, the coolant is easily accumulated near the lowermost portion of the seal member, and hence the leakage of the coolant from the contact part of both the end portions of the linear member can be prevented by the accumulated coolant.

According to Aspect 6, the leakage of the coolant from the contact part of both the end portions of the linear member can be prevented by the coolant accumulated in the case.

In any of Aspects 7 and 8, the motor can be efficiently cooled.

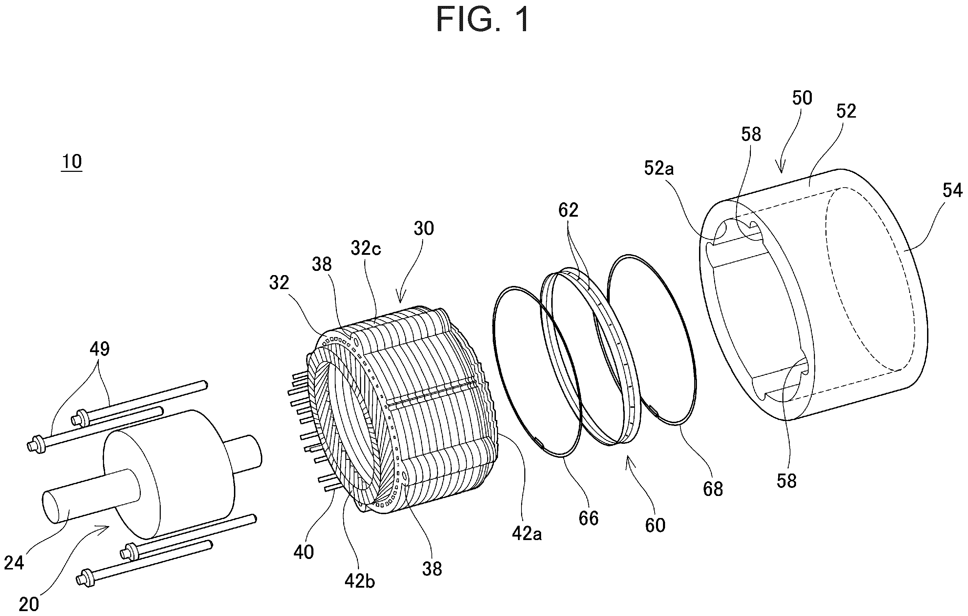

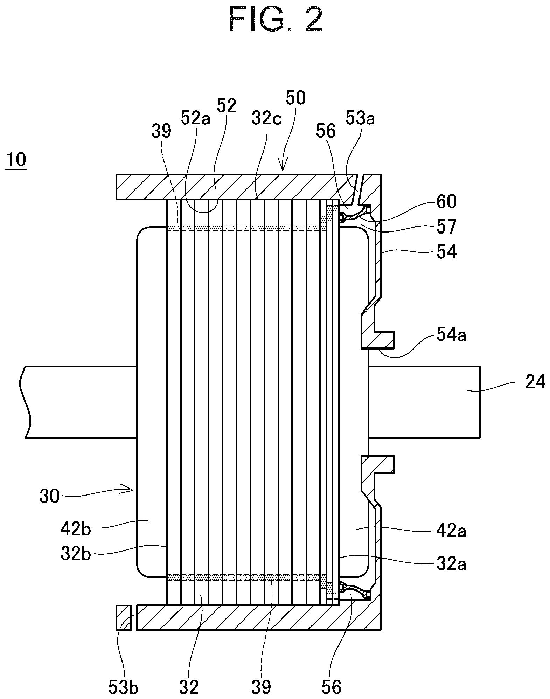

A motor 10 of an embodiment illustrated in FIG. 1 and FIG. 2 includes a rotor 20, a stator 30, and a case 50. The rotor 20 includes a shaft 24. The stator 30 has a cylindrical shape. The rotor 20 is disposed in a center hole of the stator 30 such that the center axis of the shaft 24 and the center axis of the stator 30 coincide with each other. The rotor 20 and the stator 30 are accommodated in the case 50. In the following, a direction parallel to the rotary axis of the motor 10 (that is, the center axis of the shaft 24) is referred to as an axial direction, and a direction along a radius of a circle having the rotary axis of the motor 10 as a center is referred to as a radial direction. A direction along the circle is referred to as a circumferential direction. In this embodiment, the rotary axis of the motor 10 is disposed horizontally.

The case 50 includes an outer peripheral wall 52 and a partition wall 54. The outer peripheral wall 52 has a tubular shape or a box shape. The partition wall 54 is provided on one end portion of the outer peripheral wall 52 in the axial direction. A through-hole 54a is provided at the center of the partition wall 54.

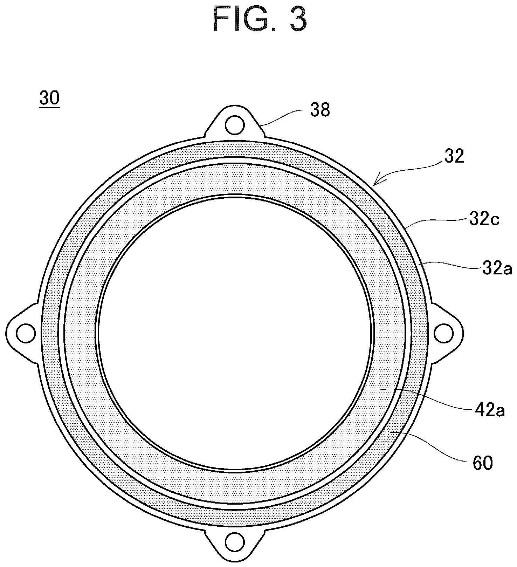

The stator 30 includes a stator core 32 and a coil 40. It is to be noted that FIG. 2 illustrates coil ends 42a, 42b of the coil 40 in a simple manner. The stator core 32 has a cylindrical shape. The coil 40 is wound around the stator core 32 (in more detail, around teeth 34 to be described later). The stator core 32 includes an end surface 32a, an end surface 32b, and an outer peripheral surface 32c. The end surface 32a is one end surface of the stator core 32 in the axial direction, and the end surface 32b is an end surface on a side opposite to the end surface 32a. The coil end 42a is provided on the end surface 32a. The coil end 42b is provided on the end surface 32b. The coil ends 42a, 42b are bent parts of the coil 40 wound around the stator core 32. The coil end 42a protrudes from the end surface 32a, and the coil end 42b protrudes from the end surface 32b. As illustrated in FIG. 3, the coil end 42a is annularly distributed in the end surface 32a. Similarly, the coil end 42b is annularly distributed in the end surface 32b.

As illustrated in FIG. 1 and FIG. 2, an inner surface 52a of the outer peripheral wall 52 of the case 50 has a cylindrical shape extending along the outer peripheral surface 32c of the stator core 32. The inner surface 52a of the outer peripheral wall 52 faces the outer peripheral surface 32c of the stator core 32. The partition wall 54 of the case 50 faces the end surface 32a of the stator core 32. The partition wall 54 is an example of the facing portion. As illustrated in FIG. 2, an interval is provided between the partition wall 54 and the end surface 32a of the stator core 32, and the coil end 42a is disposed in the interval. As illustrated in FIG. 1, the outer peripheral surface 32c of the stator core 32 has a plurality of protruding portions 38. Further, the inner surface 52a of the outer peripheral wall 52 has a plurality of recessed portions 58. The stator core 32 is accommodated in the case 50 such that each protruding portion 38 is disposed in the corresponding recessed portion 58. Each protruding portion 38 has a bolt fastening hole extending along the axial direction. A bolt 49 is inserted through each bolt fastening hole. The stator core 32 is fastened to the case 50 by the bolts 49.

The rotor 20 is disposed in the center hole of the stator core 32 in a concentric state with the stator core 32. The shaft 24 of the rotor 20 is inserted through the through-hole 54a of the case 50. The rotor 20 is supported so as to be rotatable by a bearing or the like in the case 50.

As illustrated in FIG. 1 and FIG. 2, the motor 10 includes a guide ring 60. The guide ring 60 has a ring shape. The guide ring 60 is accommodated in the case 50. The guide ring 60 is disposed so as to annularly extend around the rotary axis of the motor 10 (that is, the shaft 24). The guide ring 60 is disposed between the end surface 32a of the stator core 32 and the partition wall 54 of the case 50 in a concentric state with the rotor 20 and the stator core 32. The guide ring 60 is fixed by being sandwiched between the end surface 32a and the partition wall 54. The coil end 42a is disposed inward of the guide ring 60 in the radial direction. The guide ring 60 divides a space between the stator core 32 and the partition wall 54 into a space 56 on the outer peripheral side and a space 57 on the inner peripheral side. The space 56 on the outer peripheral side is a space surrounded by the inner surface of the case 50, the outer peripheral surface of the guide ring 60, and the end surface 32a, and has a circular-ring shape. In the following, the space 56 on the outer peripheral side is referred to as a circular-ring coolant flow path 56.

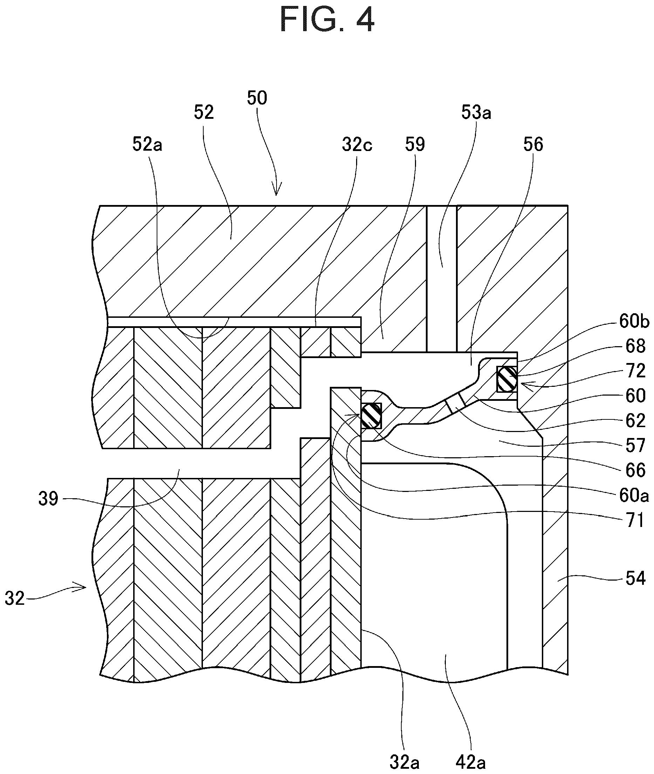

As illustrated in FIG. 4, the guide ring 60 includes an end surface 60a and an end surface 60b on both sides in the axial direction. The end surface 60a of the guide ring 60 is in contact with the end surface 32a of the stator core 32. The end surface 60a has a groove 71. The groove 71 annularly extends along the guide ring 60. A seal member 66 is provided in the groove 71. A pressure is applied to the seal member 66 when the seal member 66 is sandwiched between the stator core 32 and the guide ring 60, and thus the seal member 66 is fixed in the groove 71. The seal member 66 seals an interface (that is, a contact surface) between the guide ring 60 and the stator core 32.

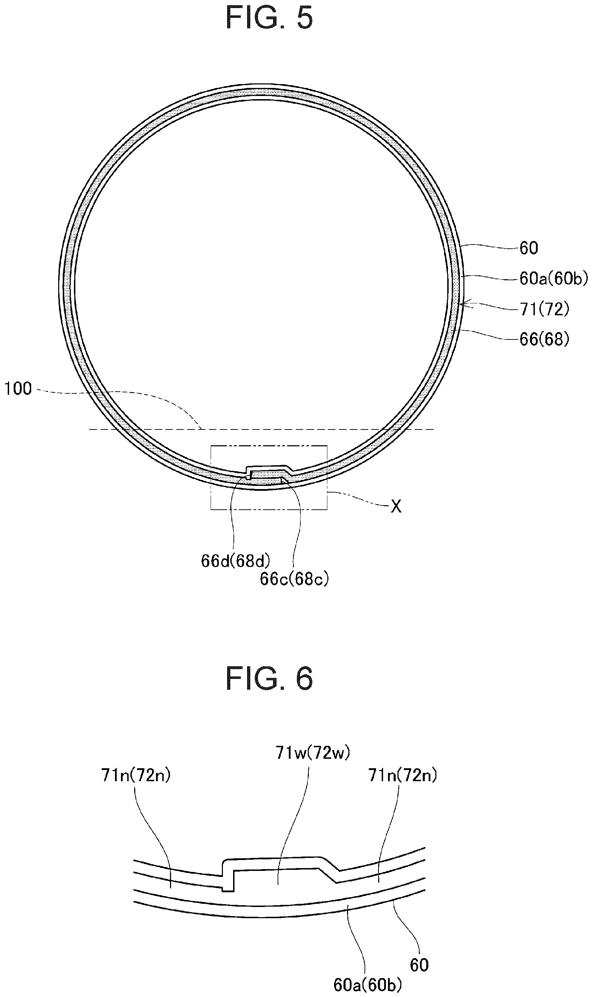

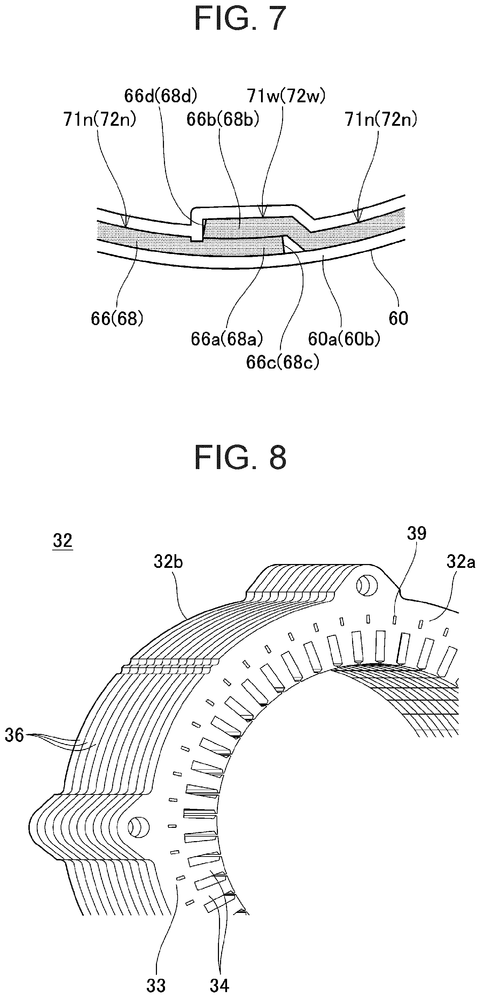

FIG. 5 illustrates the seal member 66 and the groove 71 as viewed along the axial direction. As illustrated in FIG. 5, the groove 71 annularly extends along the guide ring 60 in the end surface 60a of the guide ring 60. As illustrated in FIG. 6, the groove 71 includes a wide portion 71w and a narrow portion 71n. The wide portion 71w has a width larger than the width of the narrow portion 71n of the groove 71. The wide portion 71w is disposed at a position including the lowermost portion of the groove 71. A part of the groove 71 other than the wide portion 71w is configured of the narrow portion 71n. The seal member 66 is configured of a rubber linear member. As illustrated in FIG. 5, the linear member is a linear member extending from a tip end surface 66c to a tip end surface 66d. The linear member is fitted into the groove 71 to be formed in a circular-ring shape. The circular-ring shaped linear member configures the seal member 66. The seal member 66 is disposed such that a center axis of the seal member 66 coincides with the rotary axis of the motor 10. Thus, the seal member 66 is disposed perpendicular to the horizontal plane. As illustrated in FIG. 7, a part of the linear member in the vicinity of the tip end surface 66c (hereinafter referred to as an end portion 66a) and a part of the linear member in the vicinity of the tip end surface 66d (hereinafter referred to as an end portion 66b) overlap in the radial direction in the wide portion 71w. A pressure is applied to the end portions 66a, 66b in the radial direction when the end portions 66a, 66b are sandwiched between both side surfaces of the wide portion 71w. Thus, the end portions 66a, 66b are in close contact with each other. The overlap portion of the end portions 66a, 66b is disposed in the lowermost portion of the seal member 66.

As illustrated in FIG. 4, the end surface 60b of the guide ring 60 is in contact with the inner surface of the partition wall 54 of the case 50. The end surface 60b has a groove 72. The groove 72 annularly extends along the guide ring 60. A seal member 68 is provided in the groove 72. A pressure is applied to the seal member 68 when the seal member 68 is sandwiched between the partition wall 54 and the guide ring 60, and thus the seal member 68 is fixed in the groove 72. The seal member 68 seals an interface (that is, a contact surface) between the guide ring 60 and the partition wall 54.

The seal member 68 and the groove 72 are disposed similarly to the seal member 66 and the groove 71 illustrated in FIG. 5 to FIG. 7. It is to be noted that, in FIG. 5 to FIG. 7, reference symbols corresponding to the seal member 68 and the groove 72 are written in the parentheses. As illustrated in FIG. 5, the groove 72 annularly extends along the guide ring 60 in the end surface 60b of the guide ring 60. As illustrated in FIG. 6, the groove 72 includes a wide portion 72w and a narrow portion 72n. The wide portion 72w has a width larger than the width of the narrow portion 72n of the groove 72. The wide portion 72w is disposed at a position including the lowermost portion of the groove 72. A part of the groove 72 other than the wide portion 72w is configured of the narrow portion 72n. The seal member 68 is configured of a rubber linear member. As illustrated in FIG. 5, the linear member is a linear member extending from a tip end surface 68c to a tip end surface 68d. The linear member is fitted into the groove 72 to be formed in a circular-ring shape. The circular-ring shaped linear member configures the seal member 68. The seal member 68 is disposed such that a center axis of the seal member 68 coincides with the rotary axis of the motor 10. Thus, the seal member 68 is disposed perpendicular to the horizontal plane. As illustrated in FIG. 7, a part of the linear member in the vicinity of the tip end surface 68c (hereinafter referred to as an end portion 68a) and a part of the linear member in the vicinity of the tip end surface 68d (hereinafter referred to as an end portion 68b) overlap in the radial direction in the wide portion 72w. A pressure is applied to the end portions 68a, 68b in the radial direction when the end portions 68a, 68b are sandwiched between both side surfaces of the wide portion 72w. Thus, the end portions 68a, 68b are in close contact with each other. The overlap portion of the end portions 68a, 68b is disposed in the lowermost portion of the seal member 68.

As illustrated in FIG. 4, a stepped portion 59 is provided on the inner surface 52a of the case 50. The stepped portion 59 is provided across the entire range in the circumferential direction. The end surface 32a of the stator core 32 is in contact with the stepped portion 59 in the axial direction. The end surface 32a is in close contact with the stepped portion 59. It is to be noted that a seal member (for example, an O-ring, a metal gasket, a liquid gasket, or the like) may be provided at an interface between the end surface 32a and the stepped portion 59.

A coolant supply path 53a is provided in the case 50. The coolant supply path 53a connects the outside of the case 50 and the circular-ring coolant flow path 56. As illustrated in FIG. 2, a coolant discharge path 53b is provided in a lower portion of the case 50. The coolant discharge path 53b connects the inside and the outside of the case 50. The coolant discharge path 53b is connected to the coolant supply path 53a via a circulation flow path (not shown) provided outside of the case 50. A pump (not shown) is provided in the circulation flow path. Further, a coolant is stored in the case 50. The pump is activated to cause the coolant in the case 50 to be supplied to the circular-ring coolant flow path 56 via the coolant discharge path 53b and the coolant supply path 53a. Although a detailed description is given later, the coolant supplied to the circular-ring coolant flow path 56 is ejected into the case 50. As described above, the coolant circulates through the circulation flow path and the case 50. In this embodiment, the coolant is cooling oil. The cooling oil functions as a coolant that cools the motor 10, and also functions as lubricating oil that lubricates the rotor 20.

As illustrated in FIG. 1, the guide ring 60 has a plurality of coolant ejection flow paths 62. As illustrated in FIG. 4, each coolant ejection flow path 62 passes through the guide ring 60 in the radial direction. As illustrated in FIG. 1, the guide ring 60 has the plurality of coolant ejection flow paths 62 dispersed in the circumferential direction. As illustrated in FIG. 4, the coolant ejection flow path 62 connects the circular-ring coolant flow path 56 and the space 57 (that is, the space in which the coil end 42a is present). Each coolant ejection flow path 62 ejects the coolant in the circular-ring coolant flow path 56 toward the coil end 42a.

As illustrated in FIG. 8, the stator core 32 is configured of a plurality of electromagnetic steel sheets 36 stacked in the axial direction. The stator core 32 includes a back yoke 33 and a plurality of teeth 34. The back yoke 33 has a cylindrical shape. The teeth 34 protrude from the inner peripheral surface of the back yoke 33. That is, the teeth 34 protrude from the back yoke 33 toward the radially inner side. The teeth 34 extend along the axial direction. The teeth 34 are disposed with intervals in the circumferential direction. The coil 40 is wound around the teeth 34. The teeth 34 are positioned inward of the guide ring 60 in the radial direction. Thus, as illustrated in FIG. 3, the coil end 42a is disposed inward of the guide ring 60 in the radial direction.

As illustrated in FIG. 2, a plurality of core-interior coolant flow paths 39 is provided in the stator core 32. Each core-interior coolant flow path 39 extends along the axial direction. One end of each core-interior coolant flow path 39 is opened at the end surface 32a, and is communicated with the circular-ring coolant flow path 56. The other end of each core-interior coolant flow path 39 is opened at the end surface 32b. The core-interior coolant flow paths 39 are provided in a dispersed manner in the circumferential direction.

At the time of operation of the motor 10, the coolant is supplied from the coolant supply path 53a to the circular-ring coolant flow path 56. The coolant in the circular-ring coolant flow path 56 flows through the coolant ejection flow path 62 and the core-interior coolant flow path 39. The coolant in the coolant ejection flow path 62 is ejected toward the coil end 42a. Thus, the coil end 42a is cooled. The coolant ejected toward the coil end 42a flows to the lower portion of the case 50. Further, the coolant flowing through the core-interior coolant flow path 39 cools the stator core 32. The coolant in the core-interior coolant flow path 39 is ejected from the end surface 32b into the case 50. The coolant ejected from the end surface 32b cools the coil end 42b. The coolant ejected from the end surface 32b flows to the lower portion of the case 50. The coolant flowing to the lower portion of the case 50 and accumulated in the case 50 is sent from the coolant discharge path 53b to the coolant supply path 53a via the external pump. As described above, the coolant circulates to cool the motor 10.

In the motor 10, the guide ring 60 is sandwiched between the case 50 and the stator core 32 in the axial direction. With this configuration, a pressure can be applied to the interface between the guide ring 60 and the case 50 and the interface between the guide ring 60 and the stator core 32. An appropriate pressure is applied to the seal members 66, 68, and hence those interfaces can be appropriately sealed. Thus, leakage of the coolant at each interface can be prevented, and the flow rate of the coolant in each flow path can be accurately controlled.

Further, the seal members 66, 68 are each configured of a linear member annularly bent along the guide ring 60. The linear member can be efficiently manufactured by extrusion molding or the like, and can be manufactured at low cost. Thus, the manufacturing cost of the motor 10 can be reduced by using the linear member as the seal member. It is to be noted that, in the manufacturing process for the motor 10, the seal members 66, 68 can be installed as described below. First, a linear member is prepared by cutting a very-long linear rubber member wound around a bobbin or the like to a predetermined length. Next, the linear members are fitted into the grooves 71, 72, and thus the linear members are disposed in the grooves 71, 72 in a state of forming a circular-ring shape. Next, the guide ring 60 and the stator core 32 are incorporated into the case 50 such that the guide ring 60 is sandwiched between the partition wall 54 and the stator core 32. Thus, the seal members 66, 68 can be appropriately installed in the case 50.

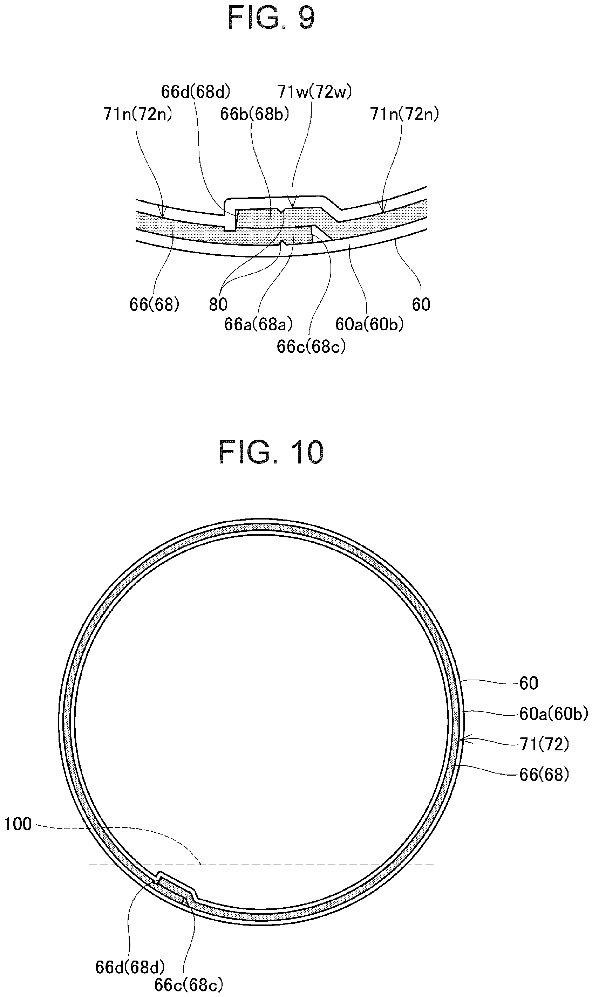

Further, in each of the seal members 66, 68, both end portions of the linear member overlap in the radial direction so as to be in close contact with each other. Accordingly, the coolant can be prevented from leaking from an overlapping part of both the end portions. It is to be noted that, in order to further increase the seal performance of the overlapping part of both the end portions, as illustrated in FIG. 9, protrusions 80 may be provided on the side surfaces of the wide portion.

A broken line 100 of FIG. 5 indicates a liquid surface of the coolant accumulated in the case 50 during the operation of the motor 10. As illustrated in FIG. 5, the lowermost portions of the guide ring 60 and the seal members 66, 68 are positioned lower than a liquid surface 100 of the coolant. Accordingly, the overlapping part of both the end portions of the linear member is soaked in the coolant. Accordingly, the coolant is less liable to leak at the overlapping part of both the end portions.

It is to be noted that, in FIG. 5, the overlapping part of the linear member is disposed in the lowermost portion of each of the seal members 66, 68, but leakage of the coolant in the overlapping part can be prevented even when the overlapping part is disposed at any position as long as the overlapping part is disposed lower than the liquid surface 100. For example, as illustrated in FIG. 10, the overlapping part of the linear member may be disposed at a position not including the lowermost portion of each of the seal members 66, 68.

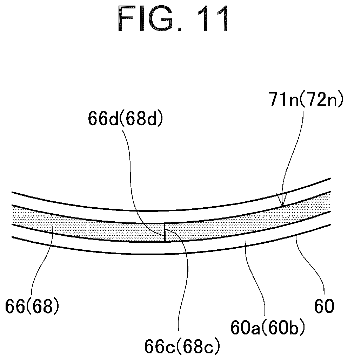

It is to be noted that, in the above-mentioned embodiment, both the end portions of the linear member overlap in the radial direction. However, as illustrated in FIG. 11, the tip end surfaces 66c, 66d on both sides of the linear member may be welded or bonded to each other. Even with this configuration, the annular seal member can be configured with use of the linear member.

Embodiments have been described in detail in the above, but these are only examples and do not limit the claims. The technology described in the claims includes various modifications and changes of the concrete examples represented above. The technical elements described herein or in the drawings exert technical utility independently or in combination of some of them, and the combination is not limited to one described in the claims as filed. Further, the technology exemplified herein or in the drawings achieves a plurality of objects at the same time, and has technical utility by achieving one of such objects.

## Claims

1. A motor, comprising:
a stator core (32);
a case (50) accommodating the stator core (32), the case (50) including a facing portion that faces one end surface of the stator core (32);
a guide ring (60) accommodated in the case (50), the guide ring (60) having a ring shape extending around a motor shaft and being sandwiched between the end surface and the facing portion; and
a seal member (66, 68) provided at a target interface that is at least one of an interface between the guide ring (60) and the end surface and an interface between the guide ring (60) and the facing portion, wherein
a space surrounded by an inner surface of the case (50), an outer peripheral surface of the guide ring (60), and the end surface configures a circular-ring coolant flow path (56),
the seal member (66, 68) is configured of a linear member, and
the linear member is sandwiched at the target interface in a state of being annularly bent along the guide ring (60) such that both end portions of the linear member are in contact with each other.

2. The motor according to claim 1, wherein the linear member includes an overlap portion in which both the end portions overlap in a radial direction of the guide ring (60).

3. The motor according to claim 2, wherein
a surface of the guide ring (60) configuring the target interface is provided with an annular groove,
the linear member is disposed in the annular groove,
the annular groove includes a narrow portion and a wide portion having a width larger than a width of the narrow portion, and
the overlap portion is disposed in the wide portion.

4. The motor according to claim 1, wherein one tip end surface and the other tip end surface of the linear member are bonded or welded to each other.

5. The motor according to any one of claims 1 to 4, wherein
the seal member (66, 68) is disposed so as to be inclined with respect to a horizontal plane, and
a part of the linear member in which both the end portions are in contact with each other is disposed in a range including a lowermost portion of the seal member (66, 68).

6. The motor according to any one of claims 1 to 4, wherein
the case (50) stores a coolant, and
a part of the linear member in which both the end portions are in contact with each other is disposed lower than a liquid level of the coolant in the case (50).

7. The motor according to any one of claims 1 to 4, wherein, inside of the stator core (32), a core-interior coolant flow path through which a coolant supplied from the circular-ring coolant flow path (56) flows is provided.

8. The motor according to any one of claims 1 to 4, wherein
a coil end is disposed on an inner peripheral side of the guide ring (60), and
the guide ring (60) has a coolant ejection flow path that passes through the guide ring (60) in a radial direction.
